# EUROPEAN PATENT SPECIFICATION

(11) **EP 2 586 263 B1**
(45) Date of publication and mention of the grant of the patent: **13.01.2016**
(21) Application number: 10729709.5
(22) Date of filing: 28.06.2010
(51) Int. Cl.: H04W 76/02

(54) **METHODS AND APPARATUSES FOR SUPPORTING HANDOVER OF A PS VOICE CALL TO A CS VOICE CALL BY USING SRVCC FUNCTION**
VERFAHREN UND VORRICHTUNGEN ZUR UNTERSTÜTZUNG DES HANDOFFS EINES PS-SPRACHANRUFS ZU EINEM CS-SPRACHANRUF MITTELS SRVCC-FUNKTION
PROCÉDÉS ET APPAREILS POUR SUPPORTER UN TRANSFERT D'UN APPEL VOCAL PS VERS UN APPEL VOCAL CS À L'AIDE D'UNE FONCTION SRVCC

(43) Date of publication of application: 01.05.2013
(73) Proprietor: Telefonaktiebolaget L M Ericsson (publ), 164 83 Stockholm (SE)
(72) Inventor: GUSTAFSSON, Roland, S-666 91 Bengtsfors (SE); RYDNELL, Gunnar, S-421 59 Västra Frölunda (SE); YANG, Yong, S-431 47 Mölndal (SE)
(74) Representative: Ericsson
(86) International application number: PCT/EP2010/059138
(87) International publication number: WO 2012/000535

(56) References cited:
- "3rd Generation Partnership Project; Technical Specification Group Services and System Aspects; Feasibility Study of Single Radio Voice Call Continuity (SRVCC) from UTRAN/GERAN to E-UTRAN/HSPA; Stage 2 (Release 10)", 3GPP STANDARD; 3GPP TR 23.885, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 13 June 2010 (2010-06-13), pages 1-44, XP050441608, [retrieved on 2010-06-13]
- ERICSSON ET AL: "Resume functionality in CSFB", 3GPP DRAFT; S2-101911_REL_9_23272_RESUME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20100412, 9 April 2010 (2010-04-09), XP050433429, [retrieved on 2010-04-09]
- "3rd Generation Partnership Project; Technical Specification Group Services and System Aspects; Single Radio Voice Call Continuity (SRVCC); Stage 2 (Release 9)", 3GPP STANDARD; 3GPP TS 23.216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 10 June 2010 (2010-06-10), pages 1-41, XP050441555, [retrieved on 2010-06-10]

## Description

### Technical field

The present invention relates to packet switched and circuit switched voice calls and resuming of packet services. More particularly, the invention relates to the Single Radio Voice Call Continuity (SRVCC) function concerning handover from the Long Term Evolution (LTE) to Universal Terrestrial Mobile Telecommunication System Terrestrial Access Network (UTRAN) and to the GSM EDGE Radio Access Network (GERAN).

### Background

As is known, voice services in LTE are packet switched and supported by the IMS system. However, as the LTE services can not be rolled out momentarily, there is a need to rely on 2G/ 3G based access technologies. One migration example is that LTE coverage becomes predominant in "islands" of densely populated areas, while existing 2G/3G services cover larger but less traffic intensive areas. As user entities move out of the LTE coverage areas, there is a need to handover the packet switched, PS, voice calls, to circuit switched, CS, voice calls of 2G/3G services. For this purpose, the Single Radio Voice Call Continuity (SRVCC) function was introduced in release 9 of the 3GPP and which function is dealt with in the following documents:
3GPP TS 23.401 v. 9.5.0, General Packet Radio Service (GPRS) enhancements for Evolved Universal Terrestrial Radio Access Network (E-UTRAN) access.
3GPP TS 29.280 v. 9. 3.0, Evolved Packet System (EPS); 3GPP Sv interface (MME to MSC, and SGSN to MSC) for SRVCC.
3GPP TS 23.216 v. 9.4.0 (2010-06), Single Radio Voice Call Continuity (SRVCC); Stage 2.

SRVCC (Single Radio Voice Call Continuity) is specified for SAE systems that provide IMS Voice in LTE. If radio coverage in LTE is lost during an IMS voice call in LTE, the SRVCC function makes it possible to hand off the voice call with service continuation to the 2G/3G CS side. The voice call is routed via an MSC but is still anchored in IMS.

The existing SRVCC function is based on NW (Network) signalling, which will enable handing over the voice call from LTE PS to 2G/3G CS service.

The Sv interface between the MME and the MSC Server is used for signalling from the MME to the MSC that handover (HO) is required. If the MSC accepts the request, it will set up the voice call towards the IMS side and will confirm to the MME that the HO is accepted. The MME will assure the RAN that the SRVCC HO is in progress and that the UE shall reselect to a 2G/3G cell. If the UE, or the 2G/3G NW, does not support DTM (Dual Transfer Mode, DTM, allowing simultaneous transfer of CS voice and PS data over the same radio channel (ARFCN)), the PS service will be suspended during the CS call. The term suspended means in this context that the UE is temporarily unavailable for PS traffic. The UE will be suspended in the MME, in the SGW and even in the PGW (since charging is done in the PGW). This means that any incoming packets to the UE will be discarded in the PGW. In case of non-DTM, after the call is finished and the USE hangs up, the UE will resume the PS service by reselecting to LTE (or possibly stay in 2G/3G by the choice of the UE) and making it-self known to the NW by sending a RAU/TAU (/Traffic Area Update) or some other NAS message. Non-DTM, or single radio, means that the UE or the NW, or both are not capable of handling dual transfer.

One problem, identified by the inventors for the present document, with the current SRVCC solution is that the SRVCC procedure collides with the ISR (Idle Mode Signalling Reduction). In case the UE moves in IDLE between LTE or 2G/3G while staying in a pre-defined list of TA's and LA's, the UE may refrain from RAU/TAU signalling. In case of non-DTM (Dual Transfer Mode) SRVCC, the UE may go to a 2G/3G cell which is in the ISR RAU/TAU list and therefore the UE shall not send RAU after the voice call is finished. Another possible case is that the UE, after the voice call is hung up, may reselect LTE, but that the UE will select the same cell in which it was located before the SRVCC HO to 2G/3G was started. In this case, the UE may not do a TAU since it is in the same cell as before. Hence, the UE may have moved back to LTE, but the NW is not aware of it. For other mobility use cases this is not a problem - the UE will be paged in both systems. But in this case the UE is suspended and no paging will take place.
If the UE does not make itself known to the PS NW, i.e. to the MME or to the SGSN, the NW can not resume the UE. Incoming packets will be thrown away in the PGW and no paging of the UE will be done by the NW. This will lead to lost PS service and lost voice service (MMTEL/ IMS services).

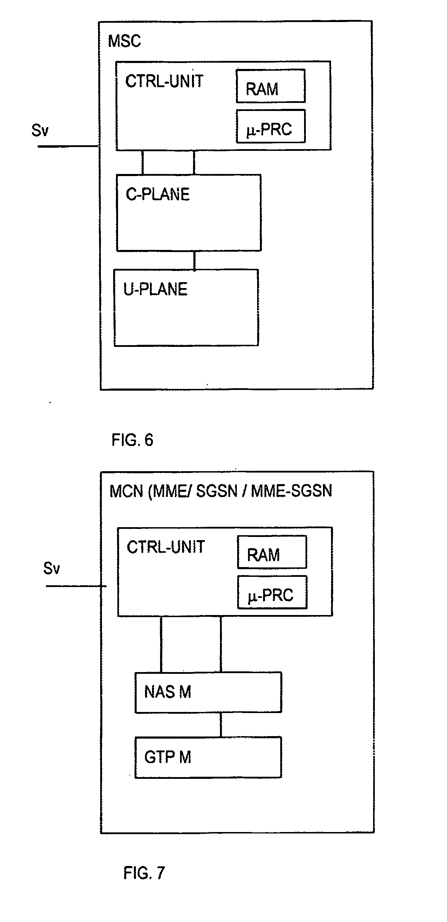

Prior art document 3GPP TR 23. 885 V0.3.0 (2010-05), chapters 6.3.3.6 and 6.3.3.7.1. These chapters show a "SRVCC CS to PS handover request". The above chapters deal with a "solution 3" of the document titled Feasibility Study of Single Radio Voice Call Continuity (SRVCC) from UTRAN/GERAN to E-UTRAN/HSPA: "Solution 3" is denoted Media anchoring in serving network with Visited Access Transfer Functionality. The architecture for this solution as indicated in Fig. 6.3.3.5-1 involves a MSC server comprising Visited Access Transfer Functionality (VATF) working together with a Media Gateway (MGW). The "handover" function resumes data sessions in PS domain and moves the voice call from CS to VoIP call over PS, so that the voice call can continue.

The above embodiment of this reference forms the basis for the respective preambles of the independent claims.

3GPP TR 23. 885 V0.3.0 (2010-05), fig. 6.5.3.1-1 regards "reverse SRVCC" via IMS. It refers to a situation in which a UE is registered in IMS and is using a circuit switched, CS, voice service. For example an operator may want to move the voice call to a packet switched bearer on LTE(E-UTRAN) if this is available. A source GERAN/UTRAN makes a decision for handover from GERAN/UTRAN to E-UTRAN. A "3. session transfer signal" is issued from the MSC Server to the IMS node, which responds with an "4. invite" signal, which is forwarded to the UE. Subsequently, a voice bearer is set up according to a "7. UE-initiated dedicated bearer activation for voice component". A PS voice call follows over IMS. The method is supporting handing over from CS services to PS services. However, in this above example, there is no resumption of any packet service as initially a CS call is carried out and not a PS service. The example neither pertains to user entities being in a suspended mode and which are therefore not being capable of PS or CS services at the same time. In this example, user entities could be in suspended mode or they could not be in suspended mode. Moreover, the example in question involves that the IMS is directly involved in a signalling procedure for handover from CS to PS.

### Summary

It is a first object of the invention to set forth at least one method for establishing for a UE being in IDLE mode to be reachable for packet services after a CS voice call has been dropped or hung up.

This object has been accomplished by a method for a Mobile Control Node, MCN, supporting handover of a packet switched, PS, voice call of a given user entity anchored in a IP Multimedia Subsystem (IMS) to a circuit switched, CS, voice call, by using a Single Radio Voice Call Continuity, SRVCC, function. The method for the Mobile Control Node further comprises the steps of - after handover from PS to CS voice call pertaining to a user entity, UE, which UE is in a suspended mode, and upon receiving a SRVCC CS to PS resume request message from a mobile switching centre, MSC,- sending an explicit / implicit resume message to a packet gateway (PGW) node or a serving gateway (SGW) node, causing the UE to resume PS services.

The above object has also been accomplished by a method for a Mobile Switching Centre (MSC) supporting handover of a packet switched, PS, voice call of a given user entity (UE) via an IP Multimedia Subsystem (IMS) to a circuit switched, CS, voice call, by using a Single Radio Voice Call Continuity, SRVCC, function. The method for the Mobile Switching Centre comprises moreover the steps of - after handover from PS to CS, and after detecting hang up or dropped call; - issuing a SRVCC CS to PS resume request message to a MCN, thereby effecting the user entity to resume PS services of the voice call for a given user entity (UE).

Alternatively, the above mentioned object has been accomplished by a :
Method for a Mobile Switching Centre (MSC) supporting handover of a packet switched, PS, voice call of a given user entity (UE) via an IP Multimedia Subsystem (IMS) to a circuit switched, CS, voice call, by using a Single Radio Voice Call Continuity, SRVCC, function. The method for a Mobile Switching Centre (MSC) further comprises the steps of,
   - after handover from PS to CS, and after detecting hang up or dropped call
   - wherein if an indication is provided to a SRVCC packet switch to circuit switch request message,
   - sending a SRVCC CS to PS Resume Request message to the MCN, and wherein if the indication is not provided,
   - ending the method such that the sending of the SRVCC CS to PS Resume Request message is prevented.

The latter method for a MSC is enabled by a method for a MCN, wherein the MCN is further adapted to issue a SRVCC PS to CS request message to a mobile switching centre (MSC) and wherein the MCN is adapted to add an indication to the SRVCC PS to CS request message, indicating to a MSC whether the UE was suspended in PS service and a SRVCC CS to PS resume request message is needed.

According to further aspects of the invention, regarding the method for the mobile control node it is further provided that the MCN issues the explicit / implicit resume message upon receiving a routing / traffic area update message from a user entity.

According to a further aspect, the MCN issues the explicit / implicit resume message upon receiving a service request message from a user entity.

According to a still further aspect, the MCN issues a SRVCC CS to PS resume response message upon receiving a SRVCC CS to PS resume request message from a mobile switching centre (MSC).

According to a further aspect regarding the method for the Mobile Switching Centre (MSC) supporting handover of a packet switched, PS, voice call of a given user entity (UE) via an IP Multimedia Subsystem (IMS) to a circuit switched, CS, voice call, by using a Single Radio Voice Call Continuity, SRVCC, function, there is provided a method comprising the further the steps of
- the step of issuing the SRVCC CS to PS resume request message to the MCN, being further dependent on the MSC has received a RIL3-CC release message from a user entity and received a Release Complete message. Moreover, the step of - issuing the SRVCC CS to PS resume request message to the MCN, being further dependent on the MSC has received an ISUP release and received a RIL3-CC Release message.

According to the invention there is further provided mobile control node, MCN, the MCN comprising a control unit (CTRL UNIT) supporting handover of a PS (PS) voice call of a given user entity anchored in a IP Multimedia Subsystem (IMS) to a CS (CS) voice call over a Mobile Switching Centre (MSC), by using a Single Radio Voice Call Continuity function, whereby,
- after handover from PS to CS voice call pertaining to a user entity, UE, which UE is in a suspended mode, and upon receiving a SRVCC CS to PS resume request message from a mobile switching centre, MSC,- issuing an explicit / implicit resume message to a packet gateway node or a serving gateway node, causing the UE to resume PS services.

According to a further aspect, the MCN is further adapted to issue a SRVCC PS to CS request message to a mobile switching centre and wherein the MCN is adapted to add an indication to the SRVCC PS to CS request message, indicating to a MSC whether the UE was suspended in PS service and a SRVCC CS to PS resume request message is needed.

According to the invention there is further provided a mobile Switching centre, MSC, comprising a control unit, user plane functionality and control plane functionality, the mobile switching centre supporting handover of a PS voice call of a given user entity via an IP Multimedia Subsystem (IMS) to a CS call over the Mobile Switching Centre (MSC), by using a Single Radio Voice Call Continuity function, whereby, - after handover from PS to CS, and after detecting hang up or dropped call - issuing a SRVCC CS to PS resume request message to a MCN, thereby effecting the user entity to resume PS services of the voice call for a given user entity.

According a further aspect of the invention regarding the mobile Switching centre if an indication is provided to the SRVCC packet switch to circuit switch request message, the MSC is adapted to
- sending the SRVCC CS to PS Resume Request message to the MCN, and wherein if the indication is not provided,
- ending the procedure such that the sending of the SRVCC CS to PS Resume Request message is prevented.

In case the UE moves in IDLE between LTE or 2G/3G while staying in a pre-defined list of TA's and LA's, the UE may refrain from RAU/TAU signalling. In case of non-DTM (Dual Transfer Mode) SRVCC, the UE may go to a 2G/3G cell which is in the ISR RAU/TAU list. However, according to the invention, the UE will be ready to resume packet services.

Further advantages of the invention will appear from the following detailed description of the invention.

### Brief description of the drawings

- Fig. 1: shows an exemplary handshake diagram according to first embodiments of a mobile control node, MCN, (that is a, MME, SGSN or a MME-SGSN) and a MSC according to the invention, wherein existing signalling according to Fig. 6.2.2.1-1 of 3GPP TS 23.216 V9.4.0 (2010-06) is indicated in brackets,
- fig. 2: shows a flow diagram for a method relating to a first embodiment of a MSC according to the invention supporting the fig. 1 scenario,
- fig. 3: shows a flow diagram for a method relating to a second embodiment of a MSC according to the invention supporting the fig. 1 scenario,
- fig. 4: shows a flow diagram for a method relating to a first embodiment of a MCN according to the invention working together with the fig. 2 MSC, supporting the fig. 1 scenario,
- fig. 5: shows a flow diagram for a method relating to a second embodiment of a MCN according to the invention working together with the fig. 3 MSC, supporting the fig. 1 scenario,
- fig. 6: shows an embodiment of a MSC according to the invention, and
- fig. 7: shows an embodiment of a MCN according to the invention.

### Detailed description of preferred embodiments of the invention

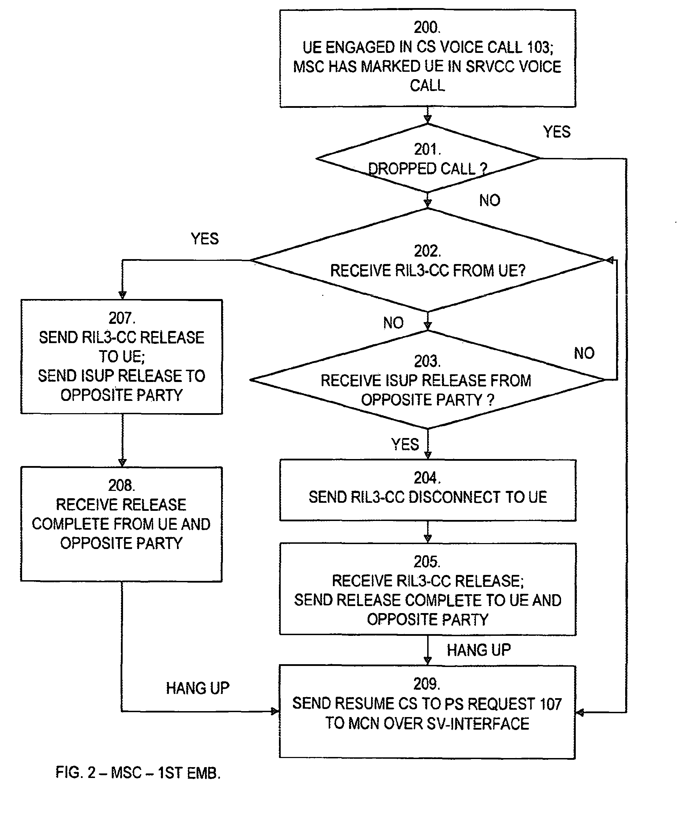

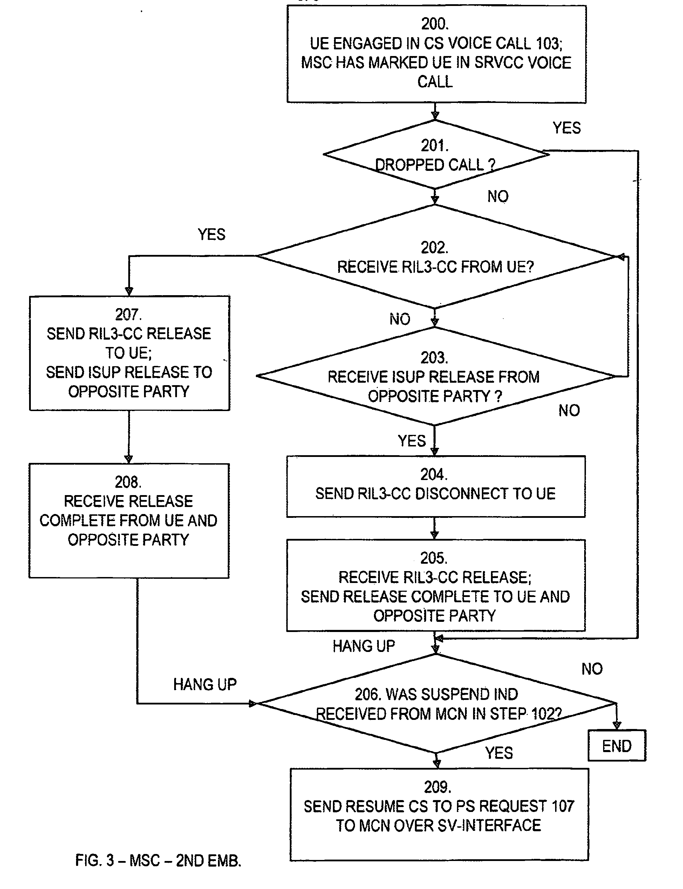

**Fig**. 1 shows an exemplary handshake diagram according to first embodiments of a mobile control node, MCN (that is a, Mobility Management Entity MME, a serving gateway support node, SGSN or a combined MME-SGSN node), and a mobile switching centre, MSC, according to the invention. In fig. 2, a first embodiment of a method pertaining mobile switching centre (MSC) method according to the invention is shown and in fig. 3 a first embodiment of a method for MCN according to the invention is shown adapted to corporate with the method shown in fig. 2 for a MSC.

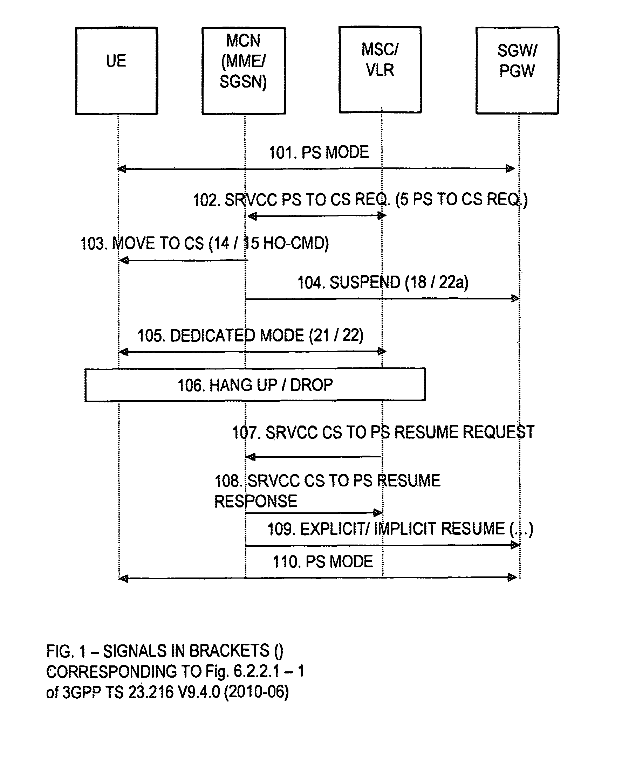

In fig. 1, the signalling according to the invention is shown in the context of the existing signalling according to Fig. 6.2.2.1-1 of 3GPP TS 23.216 V9.4.0 (2010-06) "SRVCC from E-UTRAN t6o GERAN without DTM support" which is indicated in brackets. In fig. 1 messages 101 - 106 illustrate known signals according to the prior art procedure. Also the explicit / implicit resume message 109 illustrated in fig. 1 from MME to SGW/PGW is not shown in the fig. 6.2.2.1-1 "SRVCC from E-UTRAN to GERAN without DTM support" in 23.216 but mentioned in the text to the figure.

As an example, as a starting point, the PS service mode is initiated, 101. In this situation, the PS service is ongoing in EPC/LTE and voice over LTE (MMTel) is done on one bearer, possibly in parallel with e.g. packet based services such as web surfing on some other bearer. The user may move out of the radio coverage of the LTE base station, whereby the radio network (NW) requests that handover (HO) is made to circuit switched GERAN, so that the voice call can continue.

The MSC Server has an interface denoted Sv which is specified by 3GPP in TS 29.280, which interface is associated with a GTP-like protocol. The Sv interface is used for initiating the SRVCC (Single Radio Voice Call Continuity) function. A SRVCC packet switch PS to circuit switch CS request is signalled, 102, from the MCN to the MSC Server (or Visitors Location Register (VLR)), indicating that the UE needs to hand-over (HO) the voice call to the CS operation. The MSC signals initiation of session transfer to IMS.

The MCN instructs the UE to move to CS service, 103, and issues suspend messaging, 22. As regards the MCN, the MCN instructs the SGW/PGW to perform bearer handling and suspension, 104. The suspend message indicates that no PS and CS services may appear at the same time. Then, there follows some signalling concerning a dedicated mode, 105. When the user entity e.g. after some time needs to finish the voice service, a hang up message 106 is sent from the UE to the MSC. Alternatively, the other party participating in the voice call hangs up. As a still further alternative, although seldom appearing, the voice call is dropped.

According to a first aspect of the invention, a resume function is provided which effectuates for a UE being in IDLE mode to be reachable for packet services after a CS voice call has been dropped or hung up, since the non-DTM (single radio) service will subsequently be available for PS services.

According to one aspect the resume function involves that a specific signalling message, SRVCC CS to PS resume request, 107, is provided from the MSC to the MCN. Moreover, there is provided a further specific signal denoted SRVCC CS to PS resume response message, 108, from the MCN to the MSC.
According to the invention, in order to resume the PS voice services for the UE, even if the UE is silent due to ISR (Mode Signalling Reduction) or other reasons, the MSC Server takes the initiative to "resume" the PS voice service via signal 107.

When the voice call is finished, this situation is made known to the MSC Server via reception of the hang up message, 106. However, according to the 3GPP documents mentioned above, there is no signalling on the Sv interface once the voice call has terminated.

According to the first embodiment of the invention, it is not needed that the MSC knows whether the UE is suspended. It is sufficient that the MSC signals to the MCN hat the CS call is finished and as the MCN is aware of whether the UE is in suspended mode or not, it can initiate the resume procedure if needed.

The present invention is applicable also to the non-ISR (non-Idle Mode Signalling Reduction) case, when the UE comes back to LTE with the same TA as before immediately after a CS call. Since the TA is either not changed or changed but only within the TA list, the UE may not perform a TAU to recover from the suspend state. The UE may wait and perform it only when there is a need such as if a Periodic TAU timer expired or if uplink data is pending.

For SRVCC from E-UTRAN, the MSC needs to send the Resume message to MCN, while in SRVCC from UTRAN, the MSC needs to send resume to SGSN (NOT SHOWN). The MSC will know from where the PS to CS request 102 came in the first place and will send it there.

Specific messages are specified on the Sv interface according to the TS 29.280, section 5.2. A Sv Message Type value and a Message is defined and coded per GTP (GPRS tunnel protocol) in 3GPP TS 29.274.

It is noted that messages for Message Type value 0 - 31 are specified as shown in the table below while messages for 32-255 are reserved for GTPv2 according to 3GPP TS 29.274

According to an embodiment of the invention, the SRVCC CS to PS Resume Req/Resp (107/108) are inserted as shown in the table below adding the signal under Message, Type 31 (107 in fig. 1) and (108 in fig. 1):

| **Message Type value (Decimal)** | **Message** | **Reference** |
|---|---|---|
| 0 | Reserved | 3GPP TS 29.274 [3] |
| 1 | Echo Request | 3GPP TS 29.274 [3] |
| 2 | Echo Response | 3GPP TS 29.274 [3] |
| 3 | Version Not Supported Indication | 3GPP TS 29.274 [3] |
| 4-24 | Reserved for S101 interface | 3GPP TS 29.274 [3] |
| 25 | SRVCC PS to CS Request | 5.2.2 |
| 26 | SRVCC PS to CS Response | 5.2.3 |
| 27 | SRVCC PS to CS Complete Notification | 5.2.4 |
| 28 | SRVCC PS to CS Complete Acknowledge | 5.2.5 |
| 29 | SRVCC PS to CS Cancel Notification | 5.2.6 |
| 30 | SRVCC PS to CS Cancel Acknowledge | 5.2.7 |
| 31 | SRVCC CS to PS Resume Req/Resp (107/108) | - |
| | | |
| | | |
| 32-255 | Reserved for GTPv2 | 3GPP TS 29.274 [3] |

It should be noted, the above implementation of signalling is one possibility and that alternatively, the indications in question can be sent in an existing message (implicit message) with a new use, e.g. including a new IE (information element) that changes the meaning of an existing message. Some existing message between MME-SGW-PGW, could be modified. For instance some message among messages types 25 - 30 could also be used for signalling messages 107 and 108 according to the invention.

**Fig. 2** shows one embodiment of a method for a MSC according to the invention adapted to support the scenario shown in fig. 1.

In step 200, the initial situation is that the UE is engaged in a CS voice call. The MSC has marked the UE as being in SRVCC voice call.

In step 201, it is determined whether a call is dropped. If yes proceed to step 209 below, if no to step 202.

In step 202, it is checked whether a RIL3-CC (NAS signalling indicating that the user entity wants to hang up) is received from the UE. If No, the method proceeds to step 203, if yes, to step 207.

In step 207, the MSC transmits a RIL3_CC release message to the UE and sends an ISUP release to the remote party at the other end communicating with the UE.

Thereafter, in step 208, the MSC proceeds when it receives a release complete from the UE and the opposite party to the call. After this step, the method proceeds to step 209, explained below.

In step 203, it is checked whether an ISUP release (SS7 / CS signalling indicating the other party to the call wants to hang up) is received from the opposite party to the call of the conversation for the UE, that is, from a remote party. If no, the method goes back to step 202, if yes, the method proceeds to step 204.

In step 204, the MSC sends a RIL3-CC disconnect to the UE.

In step 205, the method proceeds when the MSC receives a RIL3-CC release. The MSC sends a release complete message to the UE and the opposite party to the call.

Then in step 209, the MSC transmits a SRVCC resume CS to PS request message 107 to the MCN over the Sv interface. It is seen that if the call is hung up or dropped, the message Resume CS to PS request 107 is sent to the MCN.

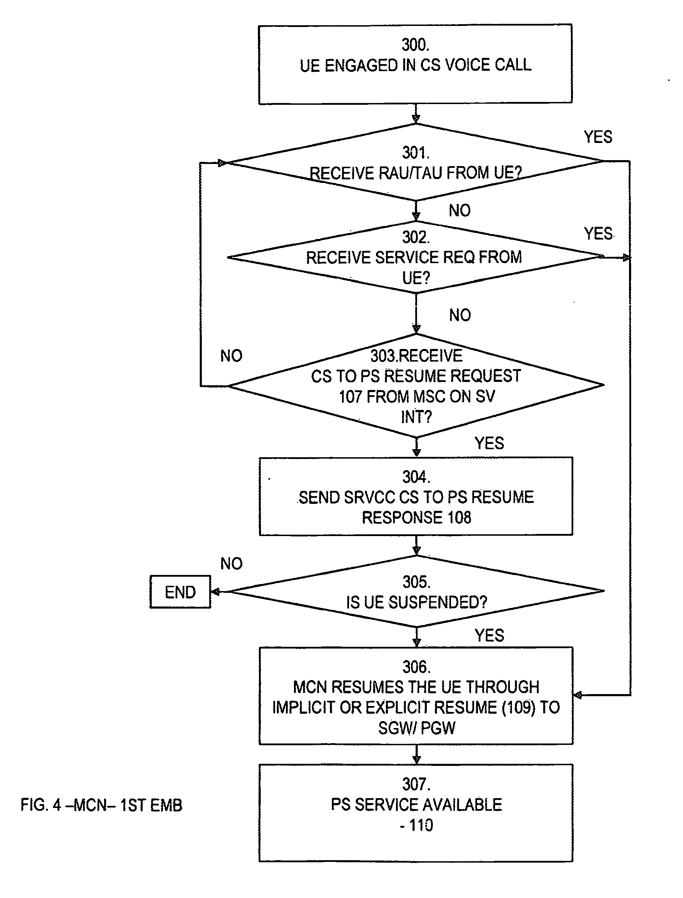

**Fig. 4** shows a first embodiment of a method for a MCN according to the invention interacting with the first embodiment of the method for a MSC according to the invention.

In step 300, the initial situation is that the UE is engaged in a CS voice call and the MSC has marked the UE to be undertaking a SRVCC voice call.

In step 301, it is checked whether the MCN has received a routing area update or traffic area update from the UE, if yes the method proceeds to step 306, if no, it proceeds to step 302.

In step 302, it is checked whether the MCN has received a service request from UE. If yes, the method proceeds to step 306 below, if no, the method proceeds to step 303.

In step 303, it is checked whether the MCN has received a CS to PS resume request message 107 from the MSC on the SV interface.

If yes, the method proceeds to step 304, where the MCN acknowledges to the MSC the CS to PS resume request message 107 by issuing a SRVCC circuit switch to packet switch resume response, 108 and moving to step 305. If no, in step 304, the method proceeds to step 301.

In step 305, it the MCN examines whether the UE is suspended. If no the MCN method ends, while, if yes, it moves to step 306. In step 306, the MCN issues an implicit or explicit resume signal, 109, which signal *per se* is known in the art to the SGW/PGW.

Following the above signal, in step 305, the PS service is made available to the UE.

### Second embodiment of the invention

In **fig. 3** a second embodiment of a MSC method according to the invention is shown

It is possible that the MSC will send the SRVCC CS to PS Resume Request message 107 when the CS call is hung up in all use cases for the method shown in fig. 2, even if the UE was not suspended. This will work because the MCN will know if the UE was suspended or not and can determine if a SRVCC CS to PS Resume Response message 108 is needed.

However, this method can result in unnecessary signalling, since in many cases, i.e. when DTM is implemented, the UE is not suspended. Therefore, according to a second embodiment of the invention, an indication is provided, e.g. a flag is added to the "SRVCC PS to CS Req" message, 102, from the MCN to the MSC, such that the MSC can know if a SRVCC CS to PS Resume CS to PS Request message 107 is needed. In this case, the MSC will only send the SRVCC CS to PS Resume Request message 107 to the MCN only if indicated to it. The suspend flag e.g. is added to the known "SRVCC PS to CS Request" message 102 shown in fig. 1 as an additional optional IE.

In fig. 3, the method of this further embodiment is shown. The method differs over the fig. 2 method in that after step 205 or 208, the method moves to step 206 instead of 209. In step 206, it is decided whether a suspend indication was received in step 102. If this is not the case, the method ends, thereby preventing sending the SRVCC CS to PS resume request message, whereas if the answer is yes, the method proceeds to step 209, sending the SRVCC resume CS to PS request, 107.

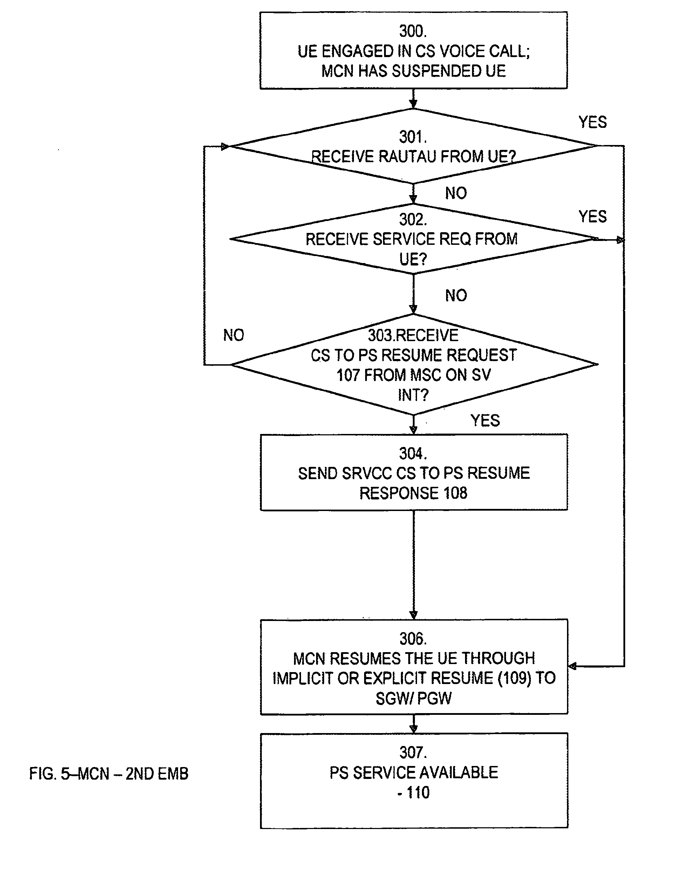

In **fig. 5**, the corresponding method for the MCN is shown.
In step 300, the initial situation is that the UE is engaged in a CS voice call and the MSC has marked the UE to be undertaking a SRVCC voice call. For this embodiment, the MCN has suspended the UE.

In contrast to the method shown in fig. 4, the step 305 is not provided, and the method goes from step 304 to 306.

The above embodiments may be implemented in a MSC and a MCN according to the following outline.

In **fig. 6**, a MSC according to the invention is shown comprising control plane functionality, C-PLANE, and user plane functionality, U-PLANE, a control unit, CTRL-UNIT and an interface Sv. The control unit, CTRL-UNIT, comprising a RAM memory and a micro processor, u-PRC, undertakes carrying out the method shown in fig. 2 or 3.

In **fig. 7**, a MCN according to the invention is shown. The MCN comprises a NAS signalling module, NAS M, a GTP signalling module GTP M, and a control unit, CTRL-UNIT. Moreover, there is provided a Sv interface. The control unit, CTRL-UNIT, comprising a RAM memory and a micro processor, µ-PRC, undertakes carrying out the method shown in fig. 4 or 5.

It is seen that in case of suspended PS service for non-DTM SRVCC function in LTE, the UEs PS Service can be resumed by a pure NW operation, which need not involve the UE. In particular, the problem that arises because of ISR, when the UE may or may not signal to the NW after the call is finished, can be supported. No changes are needed to the UE implementation or to the specified ISR function. This makes the two functions SRVCC and ISR working independently from one another.

### Abbreviations

- DTM: Dual Transfer Mode
- CS: Circuit Switched
- LTE: Long Term Evolution
- MME: Mobility Management Entity
- SAE: System Architecture Evolution
- SGW: Serving Gateway
- E-UTRAN: Enhanced UMTS Terrestrial Radio Access Network
- GW: Gateway
- HO: HandOver
- IMS: IP Multimedia Subsystem
- IMSI: International Mobile Station Identity
- IP: Internet Protocol
- ISR: Idle Mode Signalling Reduction
- MCN: Mobile Control Node
- NAS: Non Access Stratum protocol
- PGW: PDN gateway
- PS: Packet Switched
- TA: Tracking Area
- TAU: Tracking Area Update
- RAU: Routing area update
- MMTEL: Multimedia Telephony Service
- NW: network

## Claims

1. A method for a Mobile Control Node, MCN, supporting handover of a packet switched, PS, voice call of a given user entity anchored in a IP Multimedia Subsystem (IMS) to a circuit switched, CS, voice call, by using a Single Radio Voice Call Continuity, SRVCC, function,
the MCN being a Mobility Management Entity, MME or a Serving Gateway Support Node, SGSN, or a combined MME/SGSN node; the steps of
- after handover from a PS to CS (102) voice call pertaining to a user entity, UE, which UE is in a suspended mode (104; 305; 300) in which no PS and CS services may appear at the same time, the method is **characterised in that**,
upon the MCN receiving (303) a SRVCC CS to PS resume request message (107) from a mobile switching centre, MSC, the SRVCC CS to PS resume request message (107) indicating a request for resumption of PS services after a CS voice call is at least dropped (201, 205, 208) or hung up;
- the MCN issuing (306) an explicit or implicit resume message (109) to a packet gateway (PGW) node or a serving gateway (SGW) node, causing the UE to resume PS services (110).

2. Method according to claim 1, wherein the MCN further issues the explicit or implicit resume message (109) upon receiving a routing / traffic area update (RAU/ TAU - 301) message from a user entity.

3. Method according to claim 1 or 2, wherein the MCN further issues the explicit or implicit resume message (109) upon receiving a service request message (302) from a user entity.

4. Method according to any of claims 1 - 3, wherein the MCN issues (304) a SRVCC CS to PS resume response message (108) upon receiving (303) the SRVCC CS to PS resume request message (107) from a mobile switching centre (MSC).

5. Method according to any of claims 1 - 4, wherein the MCN is further adapted to issue a SRVCC PS to CS request message (102) to a mobile switching centre (MSC) and wherein the MCN is adapted to add an indication (206) to the SRVCC PS to CS request message (102), indicating to a MSC whether the UE was suspended in PS service and a SRVCC CS to PS resume request message (107) is needed.

6. Method for a Mobile Switching Centre (MSC) supporting handover of a packet switched, PS, voice call of a given user entity (UE) via an IP Multimedia Subsystem (IMS) to a circuit switched, CS, voice call, by using a Single Radio Voice Call Continuity, SRVCC, function, **characterized in that** the method
either comprising the steps of,
- after handover from PS to CS (103), and after the Mobile Switching Centre detecting hang up or dropped call (106) pertaining to the given user entity
- the Mobile Switching Centre sending (209) a SRVCC CS to PS resume request message (107) to a Mobile Control Node, MCN, the MCN being a Mobility Management Entity, MME or a Serving Gateway Support Node, SGSN, or a combined MME/SGSN node;;
thereby effecting the user entity to resume PS,
or, the method comprising the steps of
- after handover from PS to CS (103), and after the Mobile Switching Centre detecting hang up or dropped call (106)
- wherein if an indication (206) is provided to a SRVCC packet switch to circuit switch request message (102),
- the Mobile Switching Centre sending (209) a SRVCC CS to PS Resume Request message (107) for effecting the user entity to resume PS services for a given user entity, to the MCN, the MCN being a Mobility Management Entity, MME or a Serving Gateway Support Node, SGSN, or a combined MME/SGSN node;
and wherein if the indication is not provided,
- the Mobile Switching Centre ending the procedure such that the sending of the
SRVCC CS to PS Resume Request message (107) is prevented,
wherein , the SRVCC CS to PS resume request message (107) indicating a request for resumption of PS services after a CS voice call is at least dropped (201, 205, 208) or hung up.

7. Method according to claim 6, wherein
the step of issuing (209) the SRVCC CS to PS resume request message (107) to the MCN, being further dependent on the MSC has received a RIL3-CC release message (202) from a user entity and received a Release Complete message (208).

8. Method according to any of claims 6 - 7, wherein
the step of issuing (209) the SRVCC CS to PS resume request message (107) to the MCN, being further dependent on the MSC has received an ISUP release (203) and received a RIL3-CC Release message (205).

9. A mobile control node, MCN, the MCN comprising a control unit (CTRL UNIT) supporting handover of a PS (PS) voice call of a given user entity anchored in a IP Multimedia Subsystem (IMS) to a CS (CS) voice call over a Mobile Switching Centre (MSC), by using a Single Radio Voice Call Continuity SRVCC function supporting handing over from CS services to PS services; wherein the MCN being a Mobility Management Entity, MME or a Serving Gateway Support Node, SGSN, or a combined MME/SGSN node;
wherein, the mobile control node, MCN being adapted to
- after handover from a PS to CS (102) voice call pertaining to a user entity, UE, which UE is in a suspended mode (305, 206/209/303), and upon the MCN receiving a SRVCC CS to PS resume request message (107) from a mobile switching centre, MSC, the SRVCC CS to PS resume request message (107) indicating a request for resumption of PS services after a CS voice call is at least dropped (201, 205; 208) or hung up;
- the MCN issuing an explicit or implicit resume message (109, 306) to a packet gateway (PGW) node or a serving gateway (SGW) node, causing the UE to resume PS services (110).

10. Mobile control node according to claim 9, wherein the MCN is further adapted to issue a SRVCC PS to CS request message (102) to a mobile switching centre (MSC) and wherein the MCN is adapted to add an indication to the SRVCC PS to CS request message (102), indicating to a MSC whether the UE was suspended in PS service and a SRVCC CS to PS resume request message (107) is needed.

11. Mobile control node according to claim 10, the MCN being adapted to further issuing the explicit for implicit resume message (109) upon receiving a routing or traffic area update (RAU/TAU - 301) message from a user entity.

12. Mobile control node according to claim 10, the MCN being adapted to further issuing the explicit or implicit resume message (109) upon receiving a service request message (302) from a user entity.

13. Mobile control node according to claims 9 - 12, wherein the MCN being adapted to issuing (304) a SRVCC CS to PS resume response message (108) upon receiving (303) the SRVCC CS to PS resume request message (107) from a mobite switching centre (MSC).

14. Mobile Switching centre, MSC, comprising a control unit (CTRL-UNIT), user plane functionality and control plane functionality, the mobile switching centre supporting handover of a PS (PS) voice call of a given user entity via an IP Multimedia Subsystem (IMS) to a CS (CS) call over the Mobile Switching Centre (MSC), by using a Single Radio Voice Call Continuity SRVCC function, whereby,
the mobile switching centre being adapted to,
either.
- after handover from PS to CS (103), and after the Mobile Switching Centre detecting hang up or dropped call (106) pertaining to the given user entity
- the Mobile Switching Centre sending (209) a SRVCC CS to PS resume request message (107) to a Mobile Control Node, MCN, the MCN being a Mobility Management Entity, MME or a Serving Gateway (Support Node, SGSN, or a combined MME/SGSN node;;
thereby effecting the user entity to resume PS services;
or, the mobile switching center being adapted for
- after handover from PS to CS (103), and after the Mobile Switching Centre detecting hang up or dropped call (106)
- wherein if an indication (206) is provided to a SRVCC packet switch to circuit switch request message (102),
- the Mobile Switching Centre sending (209) a SRVCC CS to PS Resume Request message (107) for effecting the userentity to resume PS services for a given userentity, to the MCN, the MCN being a Mobility Management Entity, MME or a Serving Gateway Support Node, SGSN, or a combined MME/SGSN node;
and wherein if the indication is not provided.
- the Mobile Switching Centre ending the procedure such that the sending of the SRVCC CS to PS Resume Request message (107) is prevented,
the SRVCC CS to PS resume request message (107) indicating a request for resumption of PS services after a CS voice call is at least dropped (201, 205, 208) or hung up.

15. Mobile Switching centre according to claim 14, wherein
the Mobile Switching centre issuing (209) the SRVCC CS to PS resume request message (107) to the MCN, being further dependent on the MSC has received a RIL3-CC release message (202) from a user entity and received a Release Complete message (208).

16. Mobile Switching centre according to claim 14 or 15, wherein
the Mobile Switching centre issuing (209) the SRVCC CS to PS resume request message (107) to the MCN, being further dependent on the MSC has received an ISUP release (203) and received a RIL3-CC Release message (205).

## Patentansprüche

1. Verfahren für einen mobilen Steuerknoten, MCN, der Handover einer paketvermittelten, PS, Sprachverbindung einer bestimmten Benutzerinstanz, die in einem IP-Multimedia-Subsystem (IMS) verankert ist, zu einer leitungsvermittelten, CS, Sprachverbindung unter Verwendung einer Einzelfunk-Sprachverbindungskontinuitäts, SRVCC,-Funktion unterstützt,
wobei der MCN eine Mobilitätsverwaltungsinstanz, MME, oder ein versorgender Gateway-Unterstützungsknoten, SGSN, oder ein kombinierter MME/SGSN-Knoten ist;
wobei das Verfahren **dadurch gekennzeichnet ist, dass**
- nach dem Handover von einer PS- zu einer CS (102)-Sprachverbindung in Bezug auf eine Benutzerinstanz, wobei die UE in einem Wartemodus (104; 305; 300) ist, in welchem keine PS- und CS-Dienste gleichzeitig auftreten können,
nachdem der MCN eine SVRCC-CS-zu-PS-Wiederaufnahmeanforderungsnachricht (107) von einer Mobilvermittlungsstelle empfangen hat (303), die SRVCC-CS-zu-PS-Wiederaufnahmeanforderungsnachricht (107), die eine Anforderung zur Wiederaufnahme von PS-Diensten nach einer CS-Sprachverbindung anzeigt, wenigstens verworfen (21, 205, 208) oder blockiert wird;
- der MCN eine explizite oder implizite Wiederaufnahmenachricht (109) an einen Paket-Gateway (PGW)-Knoten oder einen versorgenden Gateway (SGW)-Knoten ausgibt (306), um die UE zur Wiederaufnahme von PS-Diensten (110) zu veranlassen.

2. Verfahren nach Anspruch 1, wobei der MCN ferner die explizite oder implizite Wiederaufnahmenachricht (109) bei Empfang einer Routing-/Verkehrsbereichsaktualisierungs (RAU/TAU - 301)-Nachricht von einer Benutzerinstanz ausgibt.

3. Verfahren nach Anspruch 1 oder 2, wobei der MCN ferner die explizite oder implizite Wiederaufnahmenachricht (109) bei Empfang einer Dienstanforderungsnachricht (302) von einer Benutzerinstanz ausgibt.

4. Verfahren nach einem der Ansprüche 1 bis 3, wobei der MCN eine SRVCC-CS-zu-PS-Wiederaufnahmeantwortnachricht (108) bei Empfang (303) der SRVCC-CS-zu-PS-Wiederaufnahmeanforderungsnachricht (107) von einer Mobilvermittlungsstelle (MSC) ausgibt (304).

5. Verfahren nach einem der Ansprüche 1 bis 4, wobei der MCN ferner so ausgelegt ist, dass er eine SRVCC-PS-zu-CS-Anforderungsnachricht (102) an eine Mobilvermittlungsstelle (MSC) ausgibt, und wobei der MCN so ausgelegt ist, dass er eine Anzeige (206) zur SRVCC-PS-zu-CS-Anforderungsnachricht (102) hinzufügt, die einer MSC anzeigt, ob die UE beim PS-Dienst im Wartemodus war und eine SRVCC-CS-zu-PS-Wiederaufnahmenachricht (107) benötigt wird.

6. Verfahren für eine Mobilvermittlungsstelle (MSC), die Handover einer paketvermittelten, PS, Sprachverbindung einer bestimmten Benutzerinstanz (UE) über ein IP-Multimedia-Subsystem (IMS) zu einer leitungsvermittelten, CS, Sprachverbindung unter Verwendung einer Einzelfunk-Sprachverbindungskontinuitäts, SRVCC,-Funktion unterstützt,
umfassend entweder die folgenden Schritte:
- nach dem Handover von PS zu CS (103) und, nachdem die Mobilvermittlungsstelle die blockierte oder verworfene Verbindung (106) in Bezug auf die bestimmte Benutzerinstanz erkannt hat,
- Senden (209) durch die Mobilvermittlungsstelle einer SRVCC-CS-zu-PS-Wiederaufnahmenachricht (107) an einen mobilen Steuerknoten, MCN, wobei der mobile Steuerknoten eine Mobilitätsverwaltungsinstanz, MME, oder ein versorgender Gateway-Unterstützungsknoten, SGSN, oder ein kombinierter MME/SGSN-Knoten ist;
um dadurch zu bewirken, dass die Benutzerinstanz PS wiederaufnimmt,
oder das Verfahren die folgenden Schritte umfasst:
- nach dem Handover von PS zu CS (103) und, nachdem die Mobilvermittlungsstelle die blockierte oder verworfene Verbindung (106) erkannt hat,
- wobei, wenn eine Anzeige (206) für eine SRVCC-Paketvermittlungs-zu-Leitungsvermittlungsanforderungsnachricht (102) bereitgestellt wird,
- die Mobilvermittlungsstelle (209) eine SRVCC-CS-zu-PS-Wiederaufnahmenachricht (107) zum Bewirken, dass die Benutzerinstanz PS-Dienste für eine bestimmte Benutzerinstanz wiederaufnimmt, an den MCN sendet, wobei der MCN eine Mobilitätsverwaltungsinstanz, MME, oder ein versorgender Gateway-Unterstützungsknoten, SGSN, oder ein kombinierter MME/SGSN-Knoten ist;
und wobei, wenn die Anzeige nicht bereitgestellt wird,
- die Mobilvermittlungsstelle die Prozedur beendet, derart dass das Senden der SRVCC-CS-zu-PS-Wiederaufnahmeanforderungsnachricht (107) verhindert wird,
wobei die SRVCC-CS-zu-PS-Wiederaufnahmeanforderungsnachricht (107) eine Anforderung zur Wiederaufnahme von PS-Diensten anzeigt, nachdem eine CS-Sprachverbindung wenigstens verworfen (201, 205, 208) oder blockiert wird.

7. Verfahren nach Anspruch 6, wobei
der Schritt des Ausgebens (209) der SRVCC-CS-zu-PS-Wiederaufnahmeanforderungsnachricht (107) an den MCN ferner davon abhängt, dass die MSC eine RIL3-CC-Freigabenachricht (202) von einer Benutzerinstanz empfangen und eine Freigabe-abgeschlossen-Nachricht (208) empfangen hat.

8. Verfahren nach einem der Ansprüche 6 bis 7, wobei
der Schritt des Ausgebens (209) der SRVCC-CS-zu-PS-Wiederaufnahmeanforderungsnachricht (107) an den MCN ferner davon abhängt, dass die MSC eine ISUP-Freigabenachricht (203) empfangen und eine RIL3-CC-Freigabenachricht (205) empfangen hat.

9. Mobiler Steuerknoten, MCN, wobei der MCN eine Steuereinheit (CTRL UNIT) umfasst, die Handover einer paketvermittelten, PS, Sprachverbindung einer bestimmten Benutzerinstanz, die in einem IP-Multimedia-Subsystem (IMS) verankert ist, zu einer leitungsvermittelten, CS, Sprachverbindung über eine Mobilvermittlungsstelle (MSC) unter Verwendung einer Einzelfunk-Sprachverbindungskontinuitäts, SRVCC,-Funktion unterstützt, die Handover von CS-Diensten zu PS-Diensten unterstützt; wobei der MCN eine Mobilitätsverwaltungsinstanz, MME, oder ein versorgender Gateway-Unterstützungsknoten, SGSN, oder ein kombinierter MME/SGSN-Knoten ist;
wobei der mobile Steuerknoten, MCN, so ausgelegt ist, dass:
- nach dem Handover von einer PS- zu einer CS (102)-Sprachverbindung in Bezug auf eine Benutzerinstanz, UE, wobei die UE in einem Wartemodus (305, 206/209/303) ist, und, nachdem der MCN eine SRVCC-CS-zu-PS-Wiederaufnahmeanforderungsnachricht (107) von einer Mobilvermittlungsstelle, MSC, empfangen hat, die SRVCC-CS-zu-PS-Wiederaufnahmeanforderungsnachricht (107), die eine Anforderung zur Wiederaufnahme von PS-Dienst nach einer CS-Sprachverbindung anzeigt, wenigstens verworfen (201, 205; 208) oder blockiert wird;
- der MCN eine explizite oder implizite Wiederaufnahmenachricht (109, 306) an einen Paket-Gateway (PGW)-Knoten oder einen versorgenden Gateway (SGW)-Knoten ausgibt, um die UE zur Wiederaufnahme von PS-Diensten (110) zu veranlassen.

10. Mobiler Steuerknoten nach Anspruch 9, wobei der MCN ferner so ausgelegt ist, dass er eine SRVCC-PS-zu-CS-Anforderungsnachricht (102) an eine Mobilvermittlungsstelle (MSC) ausgibt, und wobei der MCN so ausgelegt ist, dass er eine Anzeige zur SRVCC-PS-zu-CS-Anforderungsnachricht (102) hinzufügt, die einer MSC anzeigt, ob die UE beim PS-Dienst im Wartemodus war und eine SRVCC-CS-zu-PS-Wiederaufnahmenachricht (107) benötigt wird.

11. Mobiler Steuerknoten nach Anspruch 10, wobei der MCN so ausgelegt ist, dass er ferner die explizite oder implizite Wiederaufnahmenachricht (109) bei Empfang einer Routing-/Verkehrsbereichsaktualisierungs (RAU/TAU - 301)-Nachricht von einer Benutzerinstanz ausgibt.

12. Mobiler Steuerknoten nach Anspruch 10, wobei der MCN so ausgelegt ist, dass er ferner die explizite oder implizite Wiederaufnahmenachricht (109) bei Empfang einer Dienstanforderungsnachricht (302) von einer Benutzerinstanz ausgibt.

13. Mobiler Steuerknoten nach einem der Ansprüche 9 bis 12, wobei der MCN so ausgelegt ist, dass er eine SRVCC-CS-zu-PS-Wiederaufnahmeantwortnachricht (108) bei Empfang (303) der SRVCC-CS-zu-PS-Wiederaufnahmeanforderungsnachricht (107) von einer Mobilvermittlungsstelle (MSC) ausgibt (304).

14. Mobilvermittlungsstelle, MSC, umfassend eine Steuereinheit (CTRL-UNIT), Benutzerebenen-Funktionalität und Steuerebenen-Funktionalität, wobei die Mobilvermittlungsstelle Handover einer PS (PS)-Sprachverbindung einer bestimmten Benutzerinstanz über ein IP-Multimedia-Subsystem (IMS) zu einer CS (CS)-Sprachverbindung über die Mobilvermittlungsstelle (MSC) durch Verwenden einer Einzelfunk-Sprachverbindungskontinuitäts, SRVCC,-Funktion unterstützt, wobei
die Mobilvermittlungsstelle so ausgelegt ist, dass:
entweder:
- nach dem Handover von PS zu CS (103) und, nachdem die Mobilvermittlungsstelle die blockierte oder verworfene Verbindung (106) in Bezug auf die bestimmte Benutzerinstanz erkannt hat,
- die Mobilvermittlungsstelle eine SRVCC-CS-zu-PS-Wiederaufnahmenachricht (107) an einen Mobilsteuerknoten, MCN, sendet (209), wobei der mobile Steuerknoten eine Mobilitätsverwaltungsinstanz, MME, oder ein versorgender Gateway-Unterstützungsknoten, SGSN, oder ein kombinierter MME/SGSN-Knoten ist;
um dadurch zu bewirken, dass die Benutzerinstanz PS-Dienste wiederaufnimmt;
oder die Mobilvermittlungsstelle ausgelegt ist zum:
- nach dem Handover von PS zu CS (103) und, nachdem die Mobilvermittlungsstelle die blockierte oder verworfene Verbindung (106) erkannt hat,
- wobei, wenn eine Anzeige (206) für eine SRVCC-Paketvermittlungs-zu-Leitungsvermittlungsanforderungsnachricht (102) bereitgestellt wird,
- die Mobilvermittlungsstelle (209) eine SRVCC-CS-zu-PS-Wiederaufnahmenachricht (107) zum Bewirken, dass die Benutzerinstanz PS-Dienste für eine bestimmte Benutzerinstanz wiederaufnimmt, an den MCN sendet, wobei der mobile Steuerknoten eine Mobilitätsverwaltungsinstanz, MME, oder ein versorgender Gateway-Unterstützungsknoten, SGSN, oder ein kombinierter MME/SGSN-Knoten ist;
und wobei, wenn die Anzeige nicht bereitgestellt wird,
- die Mobilvermittlungsstelle die Prozedur beendet, derart dass das Senden der SRVCC-CS-zu-PS-Wiederaufnahmeanforderungsnachricht (107) verhindert wird,
wobei die SRVCC-CS-zu-PS-Wiederaufnahmeanforderungsnachricht (107) eine Anforderung zur Wiederaufnahme von PS-Dienst anzeigt, nachdem eine CS-Sprachverbindung wenigstens verworfen (201, 205, 208) oder blockiert wird.

15. Mobilvermittlungsstelle nach Anspruch 14, wobei, dass die Mobilvermittlungsstelle (209) die SRVCC-CS-zu-PS-Wiederaufnahmeanforderungsnachricht (107) an den MCN ausgibt, ferner davon abhängt, dass die MSC eine RIL3-CC-Freigabenachricht (202) von einer Benutzerinstanz empfangen und eine Freigabe-abgeschlossen-Nachricht (208) empfangen hat.

16. Mobilvermittlungsstelle nach Anspruch 14 oder 15, wobei, dass die Mobilvermittlungsstelle (209) die SRVCC-CS-zu-PS-Wiederaufnahmeanforderungsnachricht (107) an den MCN ausgibt, ferner davon abhängt, dass die MSC eine ISUP-Freigabenachricht (203) empfangen und eine RIL3-CC-Freigabenachricht (205) empfangen hat.

## Revendications

1. Procédé destiné à un noeud de commande mobile, MCN, prenant en charge un transfert intercellulaire d'un appel vocal à commutation de paquets, PS, d'une entité d'utilisateur donnée ancrée dans un sous-système multimédia IP, IMS, à un appel vocal à commutation de circuits, CS, en utilisant une fonction de continuité d'appel vocal radio unique, SRVCC,
le MCN étant une entité de gestion de mobilité, MME, ou un noeud de prise en charge de passerelle de desserte, SGSN, ou un noeud MME/SGSN combiné ;
le procédé comprenant les étapes de :
- après un transfert intercellulaire d'un appel vocal PS à un appel vocal CS (102) concernant une entité d'utilisateur, UE, qui est dans un mode suspendu (104 ; 305 ; 300) dans lequel des services PS et CS ne peuvent pas apparaître en même temps,
le procédé est **caractérisé en ce que** :
à la réception (303) par le MCN d'un message de demande de reprise de CS à PS SRVCC (107) provenant d'un centre de commutation mobile, MSC, le message de demande de reprise de CS à PS SRVCC (107) indiquant une demande de reprise de services PS après qu'un appel vocal CS est au moins perdu (201, 205, 208) ou raccroché ;
- le MCN émettant (306) un message de reprise explicite ou implicite (109) à un noeud de passerelle de paquets (PGW) ou à un noeud de passerelle de desserte (SGW), amenant l'UE à reprendre des services PS (110).

2. Procédé selon la revendication 1, dans lequel le MCN émet en outre le message de reprise explicite ou implicite (109) à la réception d'un message de mise à jour de zone d'acheminement/trafic, RAU/TAU, (301) provenant d'une entité d'utilisateur.

3. Procédé selon la revendication 1 ou 2, dans lequel le MCN émet en outre le message de reprise explicite ou implicite (109) à la réception d'un message de demande de service (302) provenant d'une entité d'utilisateur.

4. Procédé selon l'une quelconque des revendications 1 à 3, dans lequel le MCN émet (304) un message de réponse de reprise de CS à PS SRVCC (108) à la réception (303) du message de demande de reprise de CS à PS SRVCC (107) provenant d'un centre de commutation mobile, MSC.

5. Procédé selon l'une quelconque des revendications 1 à 4, dans lequel le MCN est en outre apte à émettre un message de demande de PS à CS SRVCC (102) à un centre de commutation mobile, MSC, et dans lequel le MCN est apte à ajouter une indication (206) au message de demande de PS à CS SRVCC (102) indiquant à un MSC si l' UE a été suspendu dans un service PS et un message de demande de reprise de CS à PS SRVCC (107) est nécessaire.

6. Procédé destiné à un centre de commutation mobile, MSC, prenant en charge un transfert intercellulaire d'un appel vocal à commutation de paquets, PS, d'une entité d'utilisateur, UE, donnée par l'intermédiaire d'un sous-système multimédia IP, IMS, à un appel vocal à commutation de circuits, CS, en utilisant une fonction de continuité d'appel vocal radio unique, SRVCC, **caractérisé en ce que**
soit le procédé comprend les étapes de :
- après un transfert intercellulaire de PS à CS (103) et après que le centre de commutation mobile a détecté que l'appel (106) concernant l'entité d'utilisateur donnée a été raccroché ou perdu,
- le centre de commutation mobile envoie (209) un message de demande de reprise de CS à PS SRVCC (107) à un noeud de commande mobile, MCN, le MCN étant une entité de gestion de mobilité, MME, ou un noeud de prise en charge de passerelle de desserte, SGSN, ou un noeud MME/SGSN combiné ;
en amenant de ce fait l'entité d'utilisateur à reprendre un service PS ;
soit le procédé comprend les étapes de :
- après un transfert intercellulaire de PS à CS (103) et après que le centre de commutation mobile a détecté que l'appel (106) a été raccroché ou perdu,
- si une indication (206) est fournie à un message de demande de commutation de paquets à commutation de circuits SRVCC (102),
- le centre de commutation mobile envoie (209) un message de demande de reprise de CS à PS SRVCC (107) pour amener l'entité d'utilisateur à reprendre des services PS pour une entité d'utilisateur donnée, au MCN, le MCN étant une entité de gestion de mobilité, MME, ou un noeud de prise en charge de passerelle de desserte, SGSN, ou un noeud MME/SGSN combiné ;
et si l'indication n'est pas fournie,
- le centre de commutation mobile termine la procédure de manière à empêcher l'envoi du message de demande de reprise de CS à PS SRVCC (107),
dans lequel le message de demande de reprise de CS à PS SRVCC (107) indique une demande de reprise de services PS après qu'un appel vocal CS est au moins perdu (201, 205, 208) ou raccroché.

7. Procédé selon la revendication 6, dans lequel
l'étape de l'émission (209) du message de demande de reprise de CS à PS SRVCC (107) au MCN dépend en outre de la réception, par le MSC, d'un message de libération RIL3-CC (202) provenant d'une entité d'utilisateur et d'un message de fin de libération (208) .

8. Procédé selon l'une quelconque des revendications 6 et 7, dans lequel
l'étape de l'émission (209) du message de demande de reprise de CS à PS SRVCC (107) au MCN dépend en outre de la réception, par le MSC, d'un message de libération ISUP (203) et d'un message de libération RIL3-CC (205).

9. Noeud de commande mobile, MCN, le MCN comprenant une unité de commande (CTRL UNIT) prenant en charge un transfert intercellulaire d'un appel vocal à commutation de paquets, PS, d'une entité d'utilisateur donnée ancrée dans un sous-système multimédia IP, IMS, à un appel vocal à commutation de circuits, CS, sur un centre de commutation mobile, MSC, en utilisant une fonction de continuité d'appel vocal radio unique, SRVCC, prenant en charge un transfert intercellulaire de services CS à services PS, dans lequel le MCN est une entité de gestion de mobilité, MME, ou un noeud de prise en charge de passerelle de desserte, SGSN, ou un noeud MME/SGSN combiné ;
dans lequel le noeud de commande mobile, MCN, est apte à effectuer :
- après un transfert intercellulaire d'un appel vocal PS à un appel vocal CS (102) concernant une entité d'utilisateur, UE, qui est dans un mode suspendu (305, 206/209/303) et à la réception, par le MCN, d'un message de demande de reprise de CS à PS SRVCC (107) provenant d'un centre de commutation mobile, MSC, le message de demande de reprise de CS à PS SRVCC (107) indiquant une demande de reprise de services PS après qu'un appel vocal CS est au moins perdu (201, 205, 208) ou raccroché ;
- le MCN émet un message de reprise explicite ou implicite (109, 306) à un noeud de passerelle de paquets (PGW) ou à un noeud de passerelle de desserte (SGW), amenant l'UE à reprendre des services PS (110).

10. Noeud de commande mobile selon la revendication 9, dans lequel le MCN est en outre apte à émettre un message de demande de PS à CS SRVCC (102) à un centre de commutation mobile, MSC, et dans lequel le MCN est apte à ajouter une indication au message de demande de PS à CS SRVCC (102) indiquant à un MSC si l'UE a été suspendu dans un service PS et si un message de demande de reprise de CS à PS SRVCC (107) est nécessaire.

11. Noeud de commande mobile selon la revendication 10, dans lequel le MCN est en outre apte à émettre le message de reprise explicite ou implicite (109) à la réception d'un message de mise à jour de zone d'acheminement/trafic, RAU/TAU, (301) provenant d'une entité d'utilisateur.

12. Noeud de commande mobile selon la revendication 10, dans lequel le MCN est en outre apte à émettre le message de reprise explicite ou implicite (109) à la réception d'un message de demande de service (302) provenant d'une entité d'utilisateur.

13. Noeud de commande mobile selon l'une quelconque des revendications 9 à 12, dans lequel le MCN est en outre apte à émettre (304) un message de réponse de reprise de CS à PS SRVCC (108) à la réception (303) du message de demande de reprise de CS à PS SRVCC (107) provenant d'un centre de commutation mobile, MSC.

14. Centre de commutation mobile, MSC, comprenant une unité de commande (CTRL-UNIT), une fonctionnalité de plan d'utilisateur et une fonctionnalité de plan de commande, le centre de commutation mobile prenant en charge un transfert intercellulaire d'un appel vocal à commutation de paquets, PS, d'une entité d'utilisateur, UE, donnée par l'intermédiaire d'un sous-système multimédia IP, IMS, à un appel vocal à commutation de circuits, CS, sur le centre de commutation mobile, MSC, en utilisant une fonction de continuité d'appel vocal radio unique, SRVCC, de telle manière que
soit le centre de commutation mobile est apte à effectuer:
- après un transfert intercellulaire de PS à CS (103) et après que le centre de commutation mobile a détecté que l'appel (106) concernant l'entité d'utilisateur donnée a été raccroché ou perdu,
- le centre de commutation mobile envoie (209) un message de demande de reprise de CS à PS SRVCC (107) à un noeud de commande mobile, MCN, le MCN étant une entité de gestion de mobilité, MME, ou un noeud de prise en charge de passerelle de desserte, SGSN, ou un noeud MME/SGSN combiné ;
en amenant de ce fait l'entité d'utilisateur à reprendre des services PS ;
soit le centre de commutation mobile est apte à effectuer .
- après un transfert intercellulaire de PS à CS (103) et après que le centre de commutation mobile a détecté que l'appel (106) a été raccroché ou perdu,
- si une indication (206) est fournie à un message de demande de commutation de paquets à commutation de circuits SRVCC (102),
- le centre de commutation mobile envoie (209) un message de demande de reprise de CS à PS SRVCC (107) pour amener l'entité d'utilisateur à reprendre des services PS pour une entité d'utilisateur donnée, au MCN, le MCN étant une entité de gestion de mobilité, MME, ou un noeud de prise en charge de passerelle de desserte, SGSN, ou un noeud MME/SGSN combiné ;
et si l'indication n'est pas fournie,
- le centre de commutation mobile termine la procédure de manière à empêcher l'envoi du message de demande de reprise de CS à PS SRVCC (107),
dans lequel le message de demande de reprise de CS à PS SRVCC (107) indique une demande de reprise de services PS après qu'un appel vocal CS est au moins perdu (201, 205, 208) ou raccroché.

15. Centre de commutation mobile selon la revendication 14, dans lequel
l'émission (209), par le centre de commutation mobile, du message de demande de reprise de CS à PS SRVCC (107) au MCN dépend en outre de la réception, par le MSC, d'un message de libération RIL3-CC (202) provenant d'une entité d'utilisateur et d'un message de fin de libération (208).

16. Centre de commutation mobile selon la revendication 14 ou 15, dans lequel
l'émission (209), par le centre de commutation mobile, du message de demande de reprise de CS à PS SRVCC (107) au MCN dépend en outre de la réception, par le MSC, d'un message de libération ISUP (203) et d'un message de libération RIL3-CC (205).
